# EUROPÄISCHE PATENTANMELDUNG

(11) **EP 1 452 612 A2**
(43) Veröffentlichungstag der Anmeldung: **01.09.2004**
(21) Anmeldenummer: 04002010.9
(22) Anmeldetag: 30.01.2004
(51) Int. Cl.: C22C 9/02

(54) **Bleifreie Kupferlegierung und deren Verwendung**

(30) Priorität: 28.02.2003 DE 10308779
(71) Anmelder: Wieland-Werke AG, 89070 Ulm (DE)
(72) Erfinder: Hofmann, Uwe, Dr., 89231 Neu-Ulm (DE); Breu, Monika, Dr., 89075 Ulm (DE); Siegele, Harald, Dr., 89264 Weissenhorn (DE); Bögel, Andreas, Dr., 89264 Weissenhorn (DE); Seeger, Joerg, Dr., 89073 Ulm (DE)

(57) **Zusammenfassung**

Die Erfindung betrifft eine bleifreie Kupferlegierung auf der Basis von Cu-Zn-Sn und deren Verwendung.

Die Kupferlegierung ist auf der Basis Kupfer, Zink und Zinn ohne toxische Zusätze aufgebaut und besteht aus: 60 bis 70 % Cu, 0,5 bis 3,5 % Sn und den weiteren matrixaktiven Elementen: 0,01 bis 0,5 % Fe und/oder Co, 0,01 bis 0,5 % Ni, 0,01 bis 0,5 % Mn und/oder Si, Rest Zn und unvermeidbare Verunreinigungen. Wahlweise können noch bis 3 % Mg, bis 0,2 % P und noch bis 0,5 % Ag, Al, As, Sb, Ti, Zr hinzutreten. Naturgemäß werden damit die Anforderungen an gesundheitliche und ökologische Verträglichkeit erfüllt.

## Beschreibung

Die Erfindung betrifft eine Kupferlegierung auf der Basis von Cu-Zn-Sn und deren Verwendung.

Messing wird in unterschiedlichen Bereichen des Maschinenbaus, der Elektro- und der Sanitärtechnik eingesetzt.

Im Maschinenbau und in der Elektrotechnik werden infolge des Miniaturisierungstrends die Bauteile immer kleiner und filigraner. Auch werden Komponenten aus Messing häufig mit anderen metallischen und nichtmetallischen Werkstoffen zu komplizierten Baugruppen verbunden. Beides erschwert jedoch ein auf Zertrennen bzw. Zerteilen basierendes Recycling der Werkstoffe.

Weitere Schwierigkeiten treten insbesondere dann auf, wenn die zu recycelnden Bauelemente toxische oder gesundheitsgefährdende Elemente oder Substanzen enthalten. Diese können die Mitarbeiter in einem Betrieb, der diese Materialien herstellt oder verarbeitet, unmittelbar gefährden. Eine Umweltbelastung entsteht, wenn derartige Werkstoffe längere Zeit gelagert werden müssen und dabei den Witterungseinflüssen ausgesetzt sind. Daneben kontaminieren die toxischen Substanzen gegebenenfalls die Hilfsstoffe, wie etwa die Trennmittel, welche bei der Aufbereitung von Schredderfraktionen mit dem Sink- bzw. Schwimmverfahren eingesetzt werden. Eine teure Entsorgung der Hilfsstoffe wäre dann erforderlich. Selbstverständlich sind gesundheitsgefährdende Substanzen und Elemente auch während des Gebrauchs der Bauteile unerwünscht, sofern eine Emission in die Umwelt oder den lebenden Organismus nicht vollständig vermieden werden kann.

Somit ist für derartige Produkte eine aus ökologischen und toxischen Gründen unbedenkliche Zusammensetzung entscheidend. Das gesteigerte Umweltbewusstsein, das sich in zahlreichen Normen und technischen Regelwerken, wie beispielsweise der novellierten Trinkwasserverordnung DIN 50930-6 oder der Altstoffverordnung wiederfindet, fordert entsprechende Werkstoffe.

In der Elektrotechnik werden überwiegend Pb-haltige Messinge als Kontaktwerkstoffe eingesetzt, und zwar als ruhende Kontakte oder Festkontakte, zu denen beispielsweise Klemm- und Steckverbindungen oder Steckerkontakte gehören. Bei der Werkstoffauswahl steht die leichte Verarbeitung im Vordergrund. Die entsprechenden Baugruppen können spanend aus Pb-haltigen Zerspanungsmessingen mit hoher Produktivität hergestellt werden.

Durch die Pb-Einlagerungen im Gefüge entstehen Nachteile. Die Einlagerungen wirken zwar als Spanbrecher, setzen aber auch infolge von Kerbwirkung sowie Reduzierung des tragenden Querschnitts die Festigkeit bzw. Duktilität des Werkstoffs herab. Diese Nachteile müssen über eine entsprechende Bauteildimensionierung kompensiert werden.

In allen Befestigungselementen liegen herstellungsbedingt mehr oder weniger große mechanische Eigenspannungen vor. Diese werden häufig von Zuglastspannungen überlagert, die von Schraubverbindungen herrühren. Werden die Klemmverbindungen aus den gängigen Pb-haltigen Messingen gefertigt, besteht infolge solcher Spannungen eine große Gefahr für Spannungsrisskorrosion.

In der Elektrotechnik und Elektronik besteht zudem ebenfalls Bedarf an ökologisch verträglichen Werkstoffen. Mit der Richtlinie des Europäischen Parlaments über Elektro- und Elektronik-Altgeräte zeichnet sich mittelfristig ab, dass Pb zukünftig ein unerwünschter Legierungsbestandteil ist. Ziel dieser Initiative ist in diesem Zusammenhang, den Anteil umweltverträglicher Materialien im Werkstoffkreislauf zu erhöhen.

Aus Pb-haltigen Messingen werden außerdem Bauteile oder Behältnisse für den Transport oder die Lagerung von Flüssigkeiten hergestellt. Ein wichtiger Bereich ist die Sanitärtechnik. Gerade hier ist eine Metalllässigkeit besonders problematisch. Die verwendeten Werkstoffe sollten demzufolge wenig anfällig gegenüber jeglicher Art von Korrosion sein. Die Herstellung von Bauteilen für den Transport oder die Lagerung von Flüssigkeiten erfolgt in der Regel über Zerspanung. Oft wird eine Warmumformung durch Gesenkschmieden vorgeschaltet.

Derartige bleihaltige Messinglegierungen sind beispielsweise aus der Druckschrift DE 43 08 371 C2 bekannt, die als Werkstoff für Gleitelemente Anwendung in Automobilen, Schiffen und Flugzeugen findet. Auch diese Legierung erhält ihre gute Zerspanbarkeit über eine Beimengung von einem erheblichen Anteil an Blei.

Die Weiterentwicklung gut zerspanbarer bleifreier Knetlegierungen auf Kupferbasis ist aus der Druckschrift DE 691 24 835 T2 bekannt. Die Legierung soll bisherige bleihaltige Werkstoffe ersetzen, ohne die Verarbeitungsbedingungen zu ändem. Dazu wird statt Blei der Legierung Wismut und die weiteren Elemente Phosphor, Indium und Zinn zu geringen Anteilen hinzugefügt.

Der Erfindung liegt die Aufgabe zugrunde, eine bleifreie Kupferlegierung bezüglich ihrer Eigenschaften weiter zu verbessern sowie deren Verwendung anzugeben.

Die Aufgabe wird gelöst durch eine Kupferlegierung auf der Basis Kupfer, Zink und Zinn, bestehend aus: 60 bis 70 % Cu, 0,5 bis 3,5 % Sn und den weiteren matrixaktiven Elementen: 0,01 bis 0,5 % Fe und/oder Co, 0,01 bis 0,5 % Ni, 0,01 bis 0,5 % Mn und/oder Si, Rest Zn und unvermeidbare Verunreinigungen.

Wahlweise enthält die Kupferlegierung noch bis 3 % Mg, bis 0,2% P sowie wahlweise jeweils noch bis 0,5 % Ag, Al, As, Sb, Ti, Zr.

Alle Anteile der Legierungsbestandteile sind in Gew.-% angegeben.

Die Erfindung geht dabei von der Überlegung aus, dass aus der geeigneten Kombination der Legierungselemente und die aus einem Zusammenwirken der Einzelbestandteile resultierenden Eigenschaften in ihrer Gesamtheit, die an die Legierung gestellten Erwartungen erfüllen und so der Bedarf an Werkstoffen abgedeckt werden sollte. Hierzu sollte sich der Werkstoff gleichzeitig durch
- das Fehlen toxischer Elemente,
- eine gute Zerspanbarkeit,
- eine gute Formbarkeit,
- eine hohe Korrosionsbeständigkeit,
- erhöhtes Festigkeitsniveau bei gleich hoher Duktilität gegenüber bleihaltigem Zerspanungsmessing,
- Tauglichkeit zur Massenfertigung im Halbzeugwerk und
- robuste, d.h. gegen schwankende Betriebsparameter unempfindliche Fertigung im Halbzeugwerk auszeichnen.

Die Kupferlegierung ist dazu als eine Sn-haltige CuZn-Legierung (Sondermessing) ohne toxische Zusätze ausgebildet. Naturgemäß werden damit die Anforderungen an gesundheitliche und ökologische Verträglichkeit erfüllt.

Der Cu-Gehalt der erfindungsgemäßen Legierung liegt zwischen 60 und 70 %. Cu-Gehalte unter 60 % würde zu einer Versprödung führen, was sich in einer signifikant niedrigen Bruchdehnung oder Kerbschlagbiegezähigkeit bemerkbar machen würde. Daraus würden beispielsweise Nachteile in der spanlosen Formgebung entstehen. Wenn der Cu-Gehalt 70 % übersteigt, entstünden bei der spanenden Bearbeitung mit nicht-unterbrochenem Schnitt lange, sperrige Späne.

Analoge Verhältnisse liegen bezüglich des Sn-Gehalts vor: Bei Sn-Konzentrationen unter 0,5 % ginge der Vorteil der kurzen Späne verloren; über 3,5 % würde die Zähigkeit zu weit absinken.

Fe bzw. Co ist notwendig, um die Korngröße der alpha- und der beta-Phase zu steuern. Zusätzlich senkt Fe die spezifische Spanbildungsarbeit in der Legierung. Unterhalb von 0,01 % wäre die Wirkung nicht ausreichend vorhanden. Oberhalb von 0,5 % bestünde die Gefahr von groben Ausscheidungen auch zusammen mit Si. Diese wären nachteilig für die Kaltumformung.

Ni, Mn und Si werden benutzt, um den Gefügeaufbau bei gegebenem Kupfergehalt gezielt zu beeinflussen. Mn und Si erhöhen den Anteil an kubischraumzentrierter beta-Phase, Ni stabilisiert den Anteil an kubischflächenzentriertem Kupfer-Zink-Mischkristall.

Ni unterhalb 0,01 % würde nicht ausreichen, um den Kupfermischkristall hinreichend zu stabilisieren, zusätzlich entfiele die günstige Wirkung auf den Widerstand gegen flächenhaften Korrosionsangriff. Ni oberhalb 0,5 % würde zu stärkerer Verfestigung beim Kaltformen führen und wäre daher nicht vorteilhaft.

Mn unterhalb 0,01 % wäre nicht vorteilhaft, da dann die beta-Phase in zu geringen Anteilen vorhanden sein würde. Mn oberhalb von 0,5 % würde die Formbarkeit und die Beständigkeit gegen Spannungsrisskorrosion beeinträchtigen.

Si unterhalb 0,01 % wäre nicht vorteilhaft, da die Anteile an beta-Phase zu gering ausfallen würden, Si oberhalb von 0,5 % würde die Kaltformbarkeit beeinträchtigen.

Mg verringert die spezifische Spanbildungsarbeit bei Legierungen und trägt wesentlich zur Verbesserung der Zerspanbarkeit bei. Die Ursache liegt in der Ausbildung niedrigschmelzender eutektischer Phasen bestandteile in den binären Randsystemen Cu-Mg und Zn-Mg. Die eutektische Zusammensetzung verhält sich spröde und stellt so eine Sollbruchstelle im Gefüge dar, an der ein Spanbruch eingeleitet werden kann. Oberhalb von 3 % würde die Zähigkeit zu weit absinken und eine Fertigung im Strangguss wäre nicht mehr gegeben.

Wahlweise ist P enthalten, um die Ausbildung des anfänglichen Gussgefüges und die Korrosionseigenschaften günstig zu beeinflussen. Phosphor erhöht das Fließvermögen der Schmelze und wirkt sich günstig gegen die Anfälligkeit einer Spannungsrisskorrosion aus. Zudem wirkt P einer Entzinkung entgegen. Insbesondere ab einem Anteil von 0,003 % sind diese Wirkungen signifikant. Oberhalb von 0,2 % würden jedoch die Nachteile durch eine verstärkte Neigung zur interkristallinen Korrosion an Korngrenzen überwiegen.

Optional kann bis zu 0,5 % Aluminium zu legiert werden, um die Entstehung von Anlaufschichten zu ermöglichen. Dies ist insbesondere für dekorative Zwecke vorteilhaft. Insbesondere ab einem Anteil von 0,003 % ist diese Wirkung signifikant. Gehalte über 0,5 % wären wegen der Begünstigung einer Bildung von beta-Phase für diese Anwendung nicht mehr vorteilhaft.

Halbzeug aus dem erfindungsgemäßen Werkstoff wird vorzugsweise über konventionellen Strangguss, Strangpressen bei Temperaturen zwischen 600 °C und 750 °C und einer Kaltumformung, beispielsweise durch Ziehen, hergestellt.

In dieser Fertigungsabfolge erweist sich die Zusammensetzung als problemlos fertigbar und überraschend konstant in den Eigenschaften. Dies ist bei ternären Legierungen Cu-Zn-Sn, wie sie üblicherweise in der Literatur behandelt werden, nicht gegeben. Ihnen fehlen die günstigen Eigenschaften im Strangguss und eine stabile, von Schwankungen der Betriebsparameter, beispielsweise beim Strangpressen, wenig abhängige Gefügebildung. Das betrifft sowohl den gleichmäßigen Verlauf der technologischen Kennwerte im gefertigten Produkt selbst, als auch unveränderte Eigenschaften zwischen verschiedenen verarbeiteten Gusschargen. Es zeigt sich, dass die Schwankungsbreite von gefertigten Rundstangen in ihren Eigenschaften in erster Näherung vom Gehalt der matrixaktiven Elemente abhängt. Auf Basis der Majoritätskomponenten Cu, Zn und Sn ist der Gehalt in Summe an den in der Matrix zumindest teilweise löslichen matrixaktiven Elementen Fe, Co, Ni, Mn und Si allein oder in Verbindung mit den Wahlelementen Mg, P, Ag, Al, As, Sb, Ti und Zr offenbar von entscheidender Bedeutung für die robuste, gegen schwankende Betriebsparameter unempfindliche Fertigung im Halbzeugwerk.

In bevorzugter Ausführungsform besteht die Kupferlegierung aus 60 bis 70 % Cu, 0,5 bis 3,5 % Sn, 0,07 bis 3 % Mg und 0,003 bis 0,01 % P, Rest Zn und unvermeidbare Verunreinigungen.

Alternativ und in einer weiteren bevorzugten Ausführungsform besteht die Kupferlegierung aus 60 bis 70 % Cu, 0,5 bis 3,5 % Sn, 0,07 bis 3 % Mg und 0,03 bis 0,1 % P, Rest Zn und unvermeidbare Verunreinigungen.

Alternativ und in einer weiteren bevorzugten Ausführungsform besteht die Kupferlegierung aus 60 bis 70 % Cu, 1,5 bis 2,5 % Sn, 0,07 bis 3 % Mg und 0,03 bis 0,1 % P, Rest Zn und unvermeidbare Verunreinigungen.

Alternativ und in einer weiteren bevorzugten Ausführungsform besteht die Kupferlegierung aus 60 bis 70 % Cu, 2,0 bis 2,5 % Sn, 0,07 bis 3 % Mg und 0,03 bis 0,1 % P, Rest Zn und unvermeidbare Verunreinigungen.

In allen vorstehend genannten bevorzugten Ausführungsformen ist Phosphor enthalten, um insbesondere die Ausbildung des anfänglichen Gussgefüges und die Korrosionseigenschaften günstig zu beeinflussen. Mit diesen Legierungszusammensetzungen werden mit einem Anteil von 0,03 bis 0,1 % P die an den Werkstoff gestellten Erwartungen in besonderer Weise erfüllt.

Es zeigt sich, dass bei Gehalten der matrixaktiven Elemente außer Cu, Zn und Sn unter einem gewissen Anteil so große Streuungen technologischer Eigenschaften auftreten, dass sich dies nachhaltig auf die Fertigung auswirkt und im Extremfall von einer sicheren Beherrschung des Produktionsprozesses nicht die Rede sein kann. Um dem entgegenzuwirken, beträgt vorteilhafterweise bei der Kupferlegierung der Gesamtgehalt der weiteren matrixaktiven und der wahlweise zugefügten Elemente 0,5 bis 5 %.

Bei diesen Gehalten reduziert sich die Streuung bereits deutlich und findet bei vielen Standardprozessen in einer besonders bevorzugten Ausführungsform mit einem Gesamtgehalt zwischen 0,7 bis 1 % ihr Optimum.

Je nach Prozessführung kann es allerdings auch sinnvoll sein, eher einen hohen Anteil matrixaktiver Elemente einzubringen. Die Praktikabilität ist jedoch nur bis zu einem Gesamtgehalt von max. 5 % gegeben. Über Gehalten von 5 % sind jedoch keine praktisch bedeutsamen Verbesserungen der Streuungen mehr zu beobachten, da beträchtliche unvorhersehbare Zusatzeffekte durch die überlagernden Wirkungen der Zusätze beobachtet werden, die den beabsichtigten Zweck zunichte machen.

Vorteilhaft findet die Kupferlegierung Verwendung für Kontakte, Stifte oder Befestigungselemente in der Elektrotechnik, beispielsweise als ruhende Kontakte oder Festkontakte, zu denen auch Klemm- und Steckverbindungen oder Steckerkontakte gehören, sowie in der Femmeldetechnik.

Die Legierung weist gegenüber fluiden und gasförmigen Medien eine hohe Korrosionsbeständigkeit auf. Zudem ist sie gegenüber Entzinkung und Spannungsrisskorrosion äußerst beständig. Infolge dessen eignet sich die Legierung vorteilhafterweise für einen Einsatz für Behältnisse zum Transport oder zur Lagerung von Flüssigkeiten oder Gasen, insbesondere für Behältnisse in der Kältetechnik oder für Rohre, Wasserarmaturen, Hahnverlängerungen, Rohrverbinder und Ventile in der Sanitärtechnik.

Die Unempfindlichkeit gegenüber Spannungsrisskorrosion empfiehlt die Legierung für eine Verwendung in Schraub- bzw. Klemmverbindungen, in denen technisch bedingt große elastische Energien gespeichert werden. Besonders vorteilhaft ist damit die Verwendung der Legierung für alle zug- und/oder torsionsbeanspruchte Bauteile, insbesondere für Schrauben und Muttern. Nach Kaltumformung erreicht der erfindungsgemäße Werkstoff höhere Werte für die Dehngrenze als Pb-haltige CuZn-Legierungen. Somit können in Schraubverbindungen, die sich nicht plastisch verformen dürfen, größere Anziehdrehmomente realisiert werden. Das Streckgrenzenverhältnis R_{p0,2}/Rₘ ist für die CuZnSn-Legierung kleiner als bei Automatenmessing. Schraubverbindungen, die nur einmal angezogen und dabei bewusst überdehnt werden, erreichen damit besonders hohe Haltekräfte. Wegen des höheren Festigkeitsniveaus sind über eine Miniaturisierung Gewichtsersparnisse von wenigstens 10 % möglich.

Die geringen Korrosionsraten gewährleisten auch, dass die Metalllässigkeit, d.h. die Eigenschaft durch Einwirkung von flüssigen oder gasförmigen Medien Legierungsanteile auszutragen, an sich gering ist. Insofern eignet sich der Werkstoff für Einsatzgebiete, die niedrige Schadstoffimmission zum Schutz der Umwelt erfordern. Vorteilhafterweise liegt damit die Verwendung der erfindungsgemäßen Legierung auf dem Gebiet recycelbarer Bauteile.

Bei der erfindungsgemäßen Legierung zeigt sich eine ausgeprägte Temperaturabhängigkeit der Kerbschlagzähigkeit. Bei Temperaturen über 600°C sinkt die Kerbschlagzähigkeit auf Werte, die denen mancher Pb-haltigen Legierungen entsprechen und eine vorteilhafte Verwendung für Gesenkschmiedeteile in Aussicht stellen.

Auch ohne Blei als Legierungsbestandteil hat die erfindungsgemäße Legierung eine gute Zerspanbarkeit. Sie eignet sich damit auch für die Herstellung von Gleitelementen für den Fahrzeugbau und die Luft und Raumfahrttechnik.

Verwendungsmöglichkeiten der Kupferlegierung ergeben sich sowohl für rohrförmige als auch bandförmige Ausgangsmaterialien. Vorteilhafterweise eignen sich gut fräsbare oder stanzbare Bänder, Bleche und Platten, insbesondere für Schlüssel, Gravuren, dekorative Zwecke oder für Stanzgitteranwendungen. Zur Herstellung führt konventioneller Strangguss, Warmwalzen zwischen 500 bis 850°C mit anschließendem Umformen, wie beispielsweise Kaltwalzen und auf Bedarf ergänzt durch weitere Glüh- und Umformschritte, zu entsprechendem Bandhalbzeug. Die Legierung ist als Knet-, Walz- oder Gusslegierung einsetzbar.

Die mit der Erfindung erzielten Vorteile bestehen insbesondere darin, dass diese eine gute Zerspanbarkeit und gute Formbarkeit in Verbindung mit hoher Korrosionsbeständigkeit aufweist. Hierbei ist gerade die Beständigkeit gegenüber Entzinkung und Spannungsrisskorrosion besonders ausgeprägt.

Zudem fehlen toxische Elemente, die aufgrund zunehmend strengeren Normen für Umweltbelastungen einen bedenkenlosen Einsatz, insbesondere im Zusammenhang mit Trinkwasserleitungen ermöglichen.
Ein weiterer wesentlicher Vorteil ist ein erhöhtes Festigkeitsniveau bei gleich hoher Duktilität gegenüber bleihaltigem Zerspanungsmessing.
Nicht zuletzt spielen bei der Herstellung der Legierung enge Fertigungstoleranzen eine wesentliche Rolle. Besonders vorteilhaft erweist sich die erfindungsgemäße Legierung in ihrer Eignung zur Massenfertigung im Halbzeugwerk in Bezug auf eine robuste, d.h. gegen schwankende Betriebsparameter unempfindliche Fertigung.

Die Erfindung wird anhand der Figuren näher erläutert. Darin zeigen:

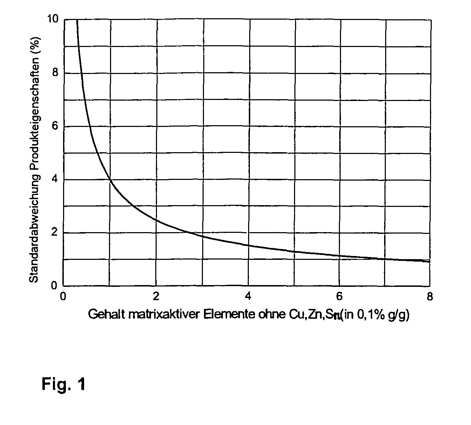

Fig. 1 den Zusammenhang zwischen der Standardabweichung der Produkteigenschaften und dem Gehalt matrixaktiver Elemente ohne Majoritätskomponenten.

In Fig. 1 ist der Zusammenhang zwischen der Standardabweichung der Produkteigenschaften und dem Gehalt matrixaktiver Elemente ohne Majoritätskomponenten dargestellt. Der Kurvenverlauf zeigt den zu erwartenden Trend für die Standardabweichung ohne Beachtung weiterer Effekte. So zeigt sich, dass bei Gehalten der matrixaktiven Elemente außer Cu, Zn und Sn über einem gewissen Anteil die Streuungen der technologischen Eigenschaften asymptotisch abnehmen, woraus sich der Schluss ergibt, dass ein möglichst hoher Anteil matrixaktiver Elemente einzubringen ist. Die Praxis zeigt jedoch, dass sich die gewünschten Werkstoffeigenschaften nur bis zu einem Gesamtgehalt von max. 5 % einstellen. Über Gehalten von 5 % sind keine Verbesserungen der Streuungen mehr zu beobachten, da beträchtliche unvorhersehbare Zusatzeffekte durch die überlagernden Wirkungen der Zusätze beobachtet werden, die zu keiner weiteren Verbesserung führen.

Werkstoffeigenschaften, die durch Einsatz der erfindungsgemäßen Zusammensetzung in ihrer Variabilität besonders in den Vordergrund treten, sind die Streckgrenze, die Zugfestigkeit, die Bruchdehnung, die Härte, die Komgröße und die Verfestigungsfähigkeit des Materials. Im weiteren Gang der Verarbeitung durch Kaltverformung und Glühen, gegebenenfalls auch im Wechsel, werden entsprechende Beobachtungen gemacht.

Untersuchungen an Mg-haltigen Legierungen haben gezeigt, dass nach einem Umformvorgang durch Strangpressen bei 690°C die eutektischen Phasenbestandteile als spröde Ausscheidungen im Gefüge eingeformt werden. Diese Gefügeveränderung kann durch eine Wärmenachbehandlung bei 500°C noch verstärkt werden. Mit einer Kaltumformung durch Ziehen erhalten Halbzeuge ihre endgültige Form und Festigkeit.

## Patentansprüche

1. Kupferlegierung (Basis Cu-Zn-Sn), bestehend aus (in Gew.-%):
60 bis 70 % Cu,
0,5 bis 3,5 % Sn und den weiteren matrixaktiven Elementen:
0,01 bis 0,5 % Fe und/oder Co,
0,01 bis 0,5% Ni,
0,01 bis 0,5 % Mn und/oder Si, und
wahlweise noch bis 3 % Mg
wahlweise noch bis 0,2 % P
wahlweise jeweils noch bis 0,5 % Ag, Al, As, Sb, Ti, Zr,
Rest Zn und unvermeidbare Verunreinigungen.

2. Kupferlegierung nach Anspruch 1, **gekennzeichnet durch**,
60 bis 70 % Cu,
0,5 bis 3,5% Sn,
0,07 bis 3 % Mg,
0,003 bis 0,01 % P,
Rest Zn und unvermeidbare Verunreinigungen.

3. Kupferlegierung nach Anspruch 1, **gekennzeichnet durch**,
60 bis 70 % Cu,
0,5 bis 3,5% Sn,
0,07 bis 3 % Mg,
0,03 bis 0,1 % P,
Rest Zn und unvermeidbare Verunreinigungen.

4. Kupferlegierung nach Anspruch 1, **gekennzeichnet durch**,
60 bis 70 % Cu,
1,5 bis 2,5 % Sn,
0,07 bis 3 % Mg,
0,03 bis 0,1 % P,
Rest Zn und unvermeidbare Verunreinigungen.

5. Kupferlegierung nach Anspruch 1, **gekennzeichnet durch**,
60 bis 70 % Cu,
2,0 bis 2,5 % Sn,
0,07 bis 3 % Mg,
0,03 bis 0,1 % P,
Rest Zn und unvermeidbare Verunreinigungen.

6. Kupferlegierung nach einem oder mehreren der Ansprüche 1 bis 5, **dadurch gekennzeichnet, dass** der Gesamtgehalt der weiteren matrixaktiven, einschließlich der wahlweise zugefügten Elemente, einen Gesamtgehalt von 0,5 bis 5 % beträgt, bevorzugt 0,7 bis 1 %.

7. Verwendung einer Kupferlegierung nach einem oder mehreren der Ansprüche 1 bis 6 für Kontakte, Stifte oder Befestigungselemente in der Elektrotechnik und Femmeldetechnik.

8. Verwendung einer Kupferlegierung nach einem oder mehreren der Ansprüche 1 bis 6 für Behältnisse zum Transport oder zur Lagerung von Flüssigkeiten oder Gasen, insbesondere für Behältnisse in der Kältetechnik oder für Rohre, Wasserarmaturen, Hahnverlängerungen, Rohrverbinder und Ventile in der Sanitärtechnik.

9. Verwendung einer Kupferlegierung nach einem oder mehreren der Ansprüche 1 bis 6 für zug- und/oder torsionsbeanspruchte Bauteile, insbesondere für Schrauben und Muttern.

10. Verwendung einer Kupferlegierung nach einem oder mehreren der Ansprüche 1 bis 6 für recycelbare Bauteile mit niedriger Schadstoffimmission zum Schutz der Umwelt.

11. Verwendung einer Kupferlegierung nach einem oder mehreren der Ansprüche 1 bis 6 für Gesenkschmiedeteile.

12. Verwendung einer Kupferlegierung nach einem oder mehreren der Ansprüche 1 bis 6 für Gleitlager.

13. Verwendung einer Kupferlegierung nach einem oder mehreren der Ansprüche 1 bis 6 für die Herstellung von gut fräsbaren oder stanzbaren Bändern, Blechen und Platten, insbesondere für Schlüssel, Gravuren, dekorative Zwecke oder für Stanzgitteranwendungen.

14. Verwendung einer Kupferlegierung nach einem oder mehreren der Ansprüche 1 bis 6 als Knet-, Walz- oder Gusslegierung.
